Europäisches Patentamt

European Patent Office

Office européen des brevets

(19)

(11) Publication number: **0 269 409 B1**

# EUROPEAN PATENT SPECIFICATION

(45) Date of publication of patent specification: **09.10.91**   (51) Int. Cl.⁵: **G02B 6/38**

(21) Application number: **87310343.6**

(22) Date of filing: **24.11.87**

(54) **Rematable optical splice utilizing rods.**

(30) Priority: **24.11.86 US 933875**
**27.07.87 US 80239**

(43) Date of publication of application:
**01.06.88 Bulletin 88/22**

(45) Publication of the grant of the patent:
**09.10.91 Bulletin 91/41**

(84) Designated Contracting States:
**DE FR GB**

(56) References cited:
**EP-A- 0 029 383**
**EP-A- 0 029 512**
**FR-A- 2 420 147**
**US-A- 4 274 708**

(73) Proprietor: **SIECOR CORPORATION**
**489 Siecor Park**
**Hickory North Carolina 28603-0489(US)**

(72) Inventor: **Dean, David L.**
**1243D 21st Avenue, N.E.**
**Hickory North Carolina 28601(US)**
Inventor: **Knecht, Dennis M.**
**1240 18th Avenue, N.E.**
**Hickory North Carolina 28601(US)**

(74) Representative: **Weston, Robert Dale et al**
**c/o PHILLIPS & LEIGH 7 Staple Inn**
**Holborn London WC1V 7QF(GB)**

EP 0 269 409 B1

## Description

This invention relates to an alignment device for splicing optical fibers, a splice for optical fibers and a splicing assembly for optical fibers.

Document US-A-4 274 708 discloses an alignment device for splicing optical fibers comprising a frame having a lengthwise channel therein that opens to opposite ends of the frame, two rigid rods lie beside one another in the channel, delimiting a groove therebetween into which two optical fiber terminal end portions may be abutted, and a lid covers the rigid rods.

It is an object of the present invention to provide an alignment device for splicing optical fibers, a splice for optical fibers incorporating such an alignment device and a splicing assembly for optical fibers; wherein the alignment device can be adjusted by rods of varying sizes, allowing a combination of optical fibers of different outside diameters and ease of removal, which encourages interior cleaning of the splice as necessary and promotes its use in areas where change of fibers in the splice, or remating is anticipated.

The broadest form of the present invention is defined in claim 1.

In an embodiment of the present invention, the rod coating is between 0.0015 inch (0.038 mm) and 0.004 inch (0.102 mm) thickness and the lid coating is between 0.0015 inch (0.038 mm) and 0.010 inch (0.254 mm). Preferably, the coatings for the rods and the lid all have a thickness of 0.002 inch (0.051 mm) + 0.0002 inch (0.0051 mm).

In use, two optical fiber terminal end portions are disposed in the groove delimited by the coated rods, the optical fibers being in end wise abutting relationship with each other. In a further embodiment of the present invention, the lid has a recess in the end thereof that is aligned with the groove delimited by the coated rods, to facilitate entry of an optical fiber into the groove. The coated portion of the lid may be flat or curved.

The channel may be rectangular in shape, the coated rods may be glass rods or optical fibers; are in very close side-by-side relationship with one another and may be in contact with each other. The preferred ratio between the diameter of the coated rods and the diameter of the optical fibers to be spliced is 4 : 1.

In another aspect of the present invention, a splice for optical fibers comprises the above described alignment device in combination with means to compress the lid closed into a mating relationship with the frame and thereby center the optical fibers.

In an embodiment of this aspect of the present invention, the compressing means comprise a housing, longer than the frame and lid, placed around the frame and lid with the end portion of the housing extending beyond the frame and lid; and tubular members nested within the housing on either end of the frame and lid. The inner diameter of the tubular members are preferably equal to the outer diameters of the buffer tubes on the optical fibers to be spliced. The tubular members may be resilient and the housing end portions may have longitudinal slots.

In a further embodiment, a malleable crimping sleeve is disposed about the housing. The crimping sleeve may be crimped over the end portions of the housing. When crimping occurs, the longitudinal slits may close and any additional pressure may be taken up by the resilient tubular members and the buffer tubes of the optical fibers. The buffer tubes are removed in that portion of the optical fibers covered by the frame and lid. Pressure from the frame and lid compresses the optical fiber terminal end portions between the three resilient surfaces, the coated portion of the lid and the coated rods, centering the optical fibers, which may be of different diameters from each other. Rods of varying circumference may be used to adjust for fibers of different outer diameters.

A small press or other clamp may be used to compress the frame and lid, instead of a crimped sleeve.

In another aspect of the present invention, a splicing assembly for optical fibers comprises a first tube; a ferrule and optical fiber, the optical fiber having a first portion and a second portion, the optical fiber first portion being disposed inside of and affixed to the ferrule and the optical fiber second portion lying outside of the ferrule and inside the first tube with a portion of the ferrule disposed inside of and affixed to the first tube; and an alignment device as claimed in any of claims 1 to 10 and a second tube both disposed in the first tube.

In a further embodiment, a part of the second tube is affixed to the first tube.

In another embodiment, a housing coupling device is affixed to the ferrule, the coupling device being adapted to be removably coupled to a receiving device.

An index matching gel may be placed between the spliced fibre ends to eliminate Fresnel losses.

The applicants believe that variations in thickness of the resilient coatings on the rod and lid cause changes in performance of the splice. If the coating is too thick or two narrow, the temperature and attenuation performance suffer. Testing shows that the resilient coating thickness on the rods and cover should be between 0.0015 inches (0.038mm) and 0.004 inches (0.102 mm) with the ideal coating thickness

2

being in the neighbourhood of 0.002 inches (0.051 mm). Measurement error is approximately ± 0.0002 inches (0.0051mm). The following table gives results for rods and a flat lid each having the listed coating thickness:

### Splice Losses in Decibels
### As a Function of Coating Thickness

| Coating Thickness Inches (millimetres) | | Relative Splice Loss-db |
|---|---|---|
| 0 | 0 | 0.7 |
| 0.0005 | (0.013) | 0.45 |
| 0.0015 | (0.038) | 0.4 |
| 0.002 | (0.051) | 0 |
| 0.004 | (0.102) | 0.4 |

These results show that a rod and lid coating thickness between 0.0015 inches (0.038mm) and 0.004 inches (0.102mm) is critical because it yields a splice loss (measured in db) less than those experienced using coatings of other thickness. On the other hand, despite the desirable attenuation data observed with the rods and lid both having a coating between 0.0015 and 0.004 inches (0.038 and 0.102 mm) thick, the same result (desirable attenuation) can also be achieved when the coating of the lid is between 0.0015 and 0.010 inches (0.038 and 0.254 mm) thick when the thickness of the rod coating is kept between the range of 0.0015 and 0.004 inches (0.038 and 0.102 mm).

The above and other features of the present invention are illustrated, by way of example in the drawings, wherein:-

Figure 1 shows a perspective view of the frame, lid, and rods;

Figures 2 shows a cutaway or perspective view of the assembled frame and lid surrounded by the tubular housing and resilient tubular members;

Figure 3 is a cross sectional view along line 3-3 of Figure 2;

Figure 4 is a partial cut-a-way perspective view of the assembly covered by the malleable crimping sleeve;

Figure 5a is a perspective view of one embodiment of a crimping tool;

Figure 5b is a perspective view of another embodiment of a crimping tool;

Figure 6 is a perspective view of the crimping tool in crimping the malleable sleeve of Figure 4;

Figure 7 is a perspective view of a second embodiment of the invention;

Figure 8 is an end view of the assembled components of Figure 7;

Figure 9 is a side cutaway view of the assembled components of Figure 7;

Figure 10 is a perspective view of a ferrule and an optical fibre;

Figure 11 is a perspective view of the combination of the elements of Figure 10;

Figure 12 is a perspective view of the combination of Figure 11 with one free edge of the ferrule polished to a flat surface and to the ferrule;

Figure 13 is a cross sectional front elevation of the combination shown in Figure 12 along lines 13-13;

Figure 14 is a perspective cutaway view of the ferrule optical fibre combination of Figures 12 and 13 inserted in a first tube;

Figure 15 is a perspective cutaway view of the combination of Figure 14 plus an alignment device channel with rods;

Figure 16 is a perspective cutaway view of the combination of Figure 15 plus a lid for the alignment device;

Figure 17 is a cross-sectional view of the invention of Figures 16 and 19 along line 17-17;

Figure 18 and 19 are perspective views of the combination of Figure 16 with the addition of a second tube;

Figure 20 is a partial cutaway perspective of the combination of Figure 19 with a field inserted optical fibre inserted in the second tube and the alignment device; and

Figure 21 is a perspective cutaway view of the combination of Figure 20 (element 61) incorporated into a housing-coupling device to form element 62 that is removably affixable to receiving device 63.

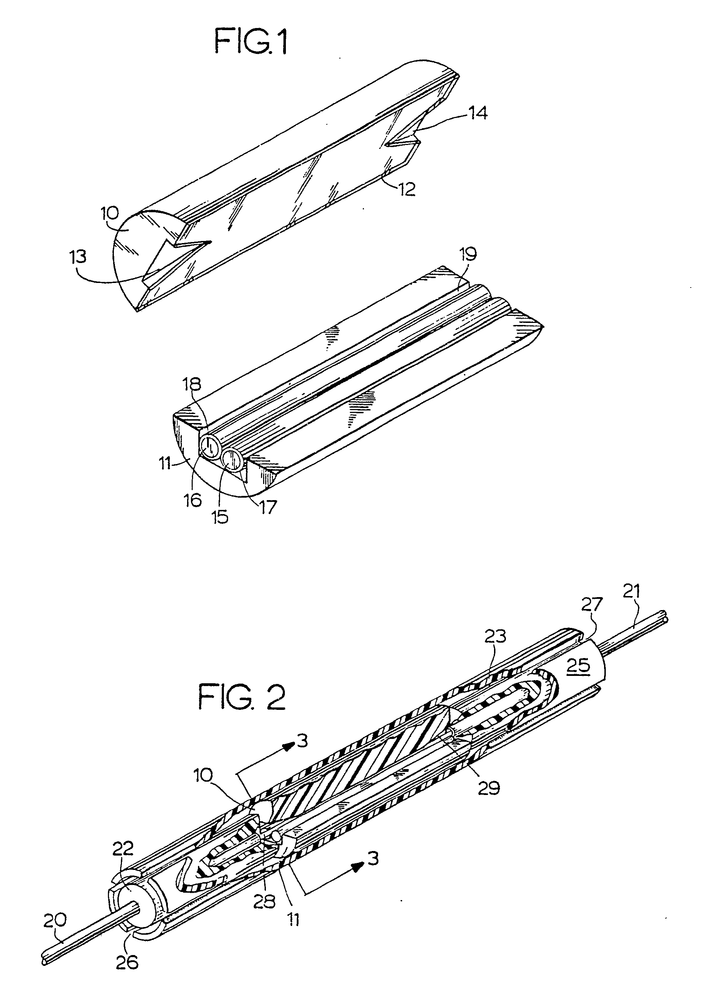

Figure 1 shows a perspective view of the frame and lid of the first embodiment of the invention. Plastic lid 10 fits over plastic frame 11. Frame 11 contains rectangular channel 19. Resting in channel 19 are glass rod 15, having a resilient coating 17, and glass rod 16, covered by resilient coating 18. Lid 10 has recesses 13 and 14, allowing for easier insertion of optical fibres to be spliced. Lid 10 also has a resilient coating 12, which preferably also coats recesses 13 and 14. Resilient coatings which may be used on the rods and lid include polyurethane, silicone and acrylate.

Figure 2 shows a cutaway perspective view of the assembled frame and lid of Figure 1 during splicing. Optical fibre 28 in buffer tube 20 enters through recess 13 and optical fibre 29 in buffer tube 21 enters through recess 14. The frame and lid are between resilient tubular members 22 and 23, each having an inner diameter suitable to fit around buffer tubes 20 and 21 and preferably an outer diameter matching the outer diameter of assembled frame 10 and 11. The buffer tubes have been removed over the portions of the optical fibres to be spliced within frame 11 and lid 10. Tubular housing 25 is placed over the resilient tubular members 22, 23 and assembled frame 11 and lid 10. Note tubular housing 25 has longitudinal slits such as 26 and 27 therein. These slits come into play during the crimping process explained below.

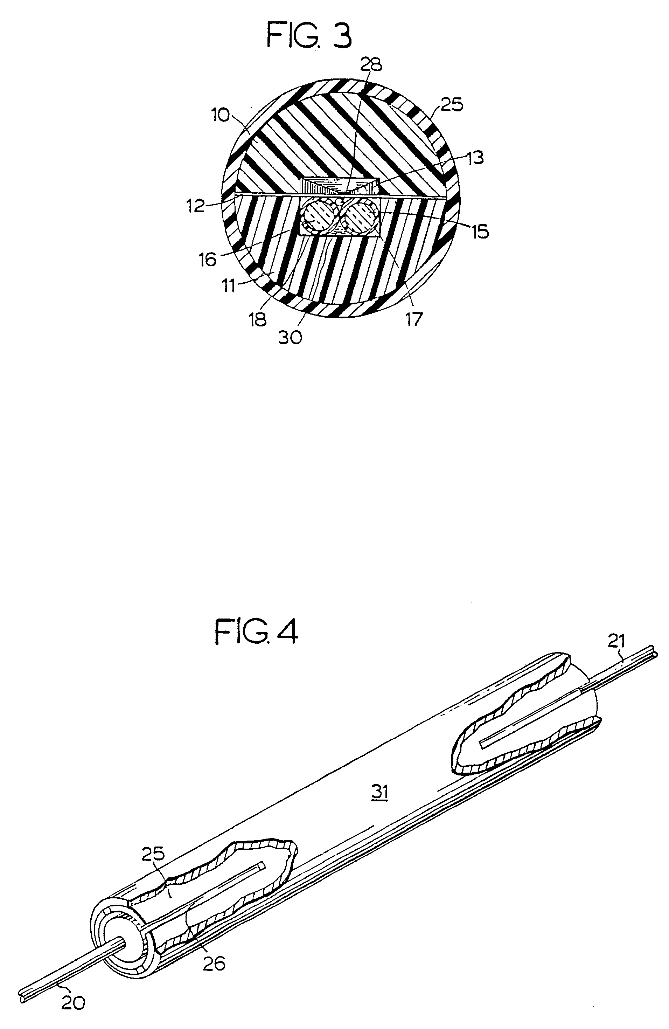

Figure 3 is a sectional view along line 3-3 of Figure 2. This view shows index matching gel 30 which is placed within channel 19 in the space not occupied by the optical fibres and coated rods in order to minimize attenuation losses resulting from the different indexes of refraction of the optical fibres and any air space which may remain between them. Note tubular housing 25 which has been placed around the assembled frame and lid.

Figure 4 is basically the same view as that of Figure 2, except that a malleable copper tubular crimping sleeve 31 has been placed over tubular housing 25.

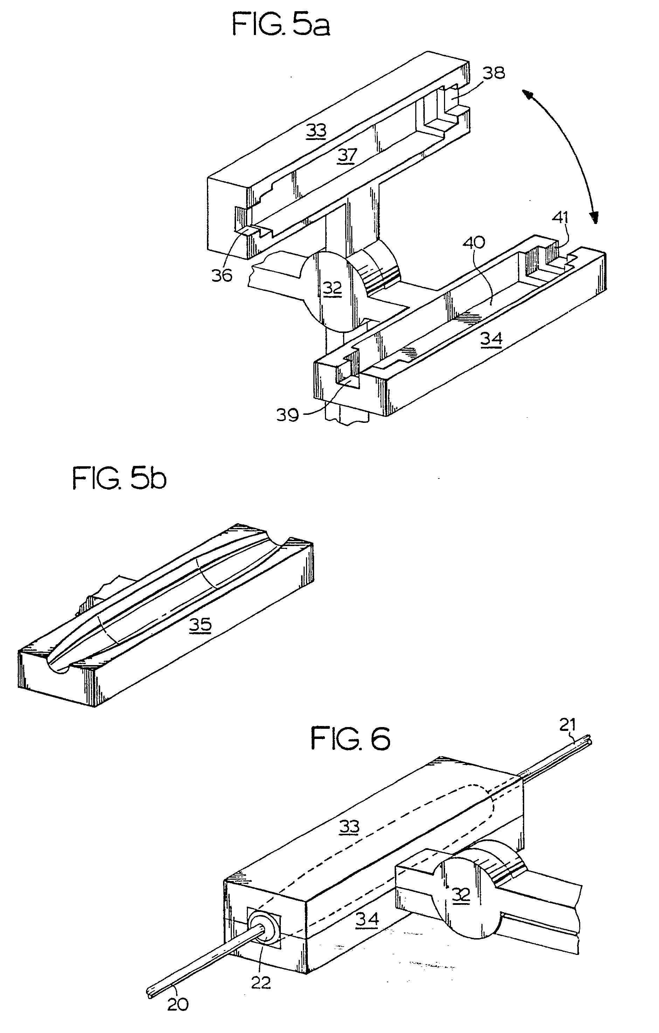

Figures 5a and 5b show two different embodiments which may be used for a crimping tool contemplated by the invention. Jaws 33 and 34 extend from pivot 32. Jaw 33 contains cavity 37 and jaw 34 contains cavity 40. Cavities 37 and 40 have narrower stepped end portions 36, 38 and 39, 41 to allow crimping to take place at the ends of the crimping sleeve, but not in the middle portion. Both jaws may also take the shape of jaw 35 in Figure 5b, where again the cavity is narrower at the ends of the jaw than in the middle in order to achieve the same purpose.

Figure 6 shows the crimping tool in operation. The tool is so designed that the crimping sleeve is crimped at its ends but not in the middle portion. To protect the fragile glass optical fibres, the longitudinal slits in the tubular housing may close and any further forces are absorbed by the resilient tubular members such as 22 and buffer tubes 20 and 21.

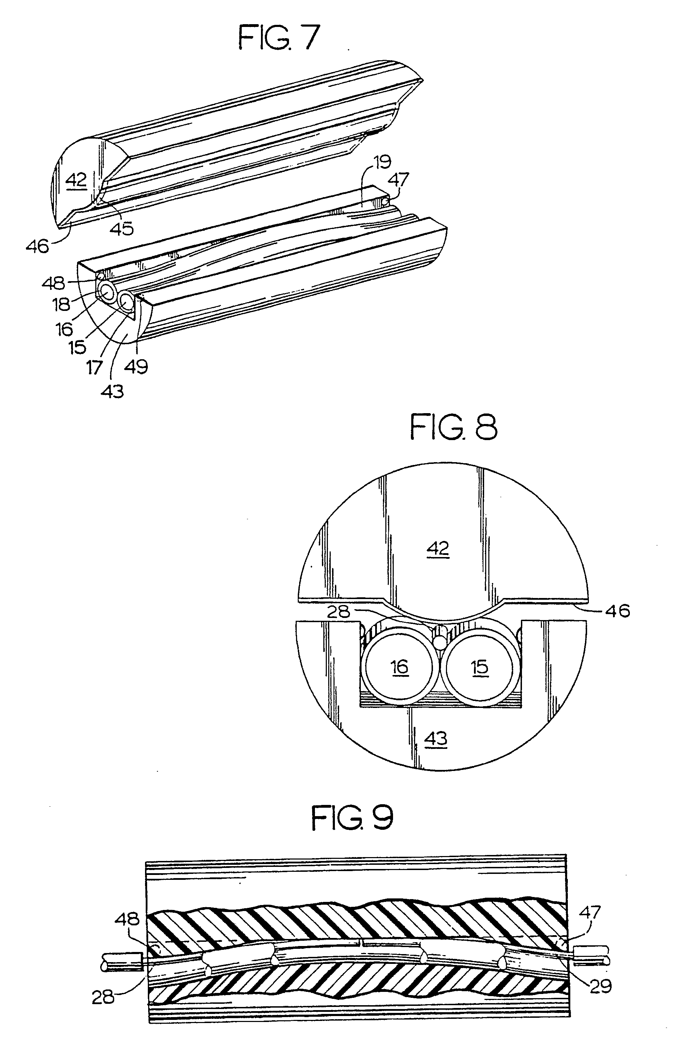

Figure 7 shows the second embodiment of the invention. Here lid 42 having resilient coating 46 fits over frame 43. In this case, lid 42 has a convex smooth protuberance 45. Also note that channel 19 in frame 43 is deeper at the ends than at the middle and that frame 43 has dimples at the four upper side corners of channel 19. See, for example, dimples 48, 49, and 47. This arrangement allows the user to press the ends of the rods 15 and 16 slightly lower in the channel than at the middle of the rods. Resilient coatings 17 and 18 on rods 15 and 16 facilitate the pressing to take place.

Figure 8 shows an end view of the frame and lid of Figure 7, note optical fibre 28 is being pressed by the resilient coatings on rod 15, rod 16, and lid 42.

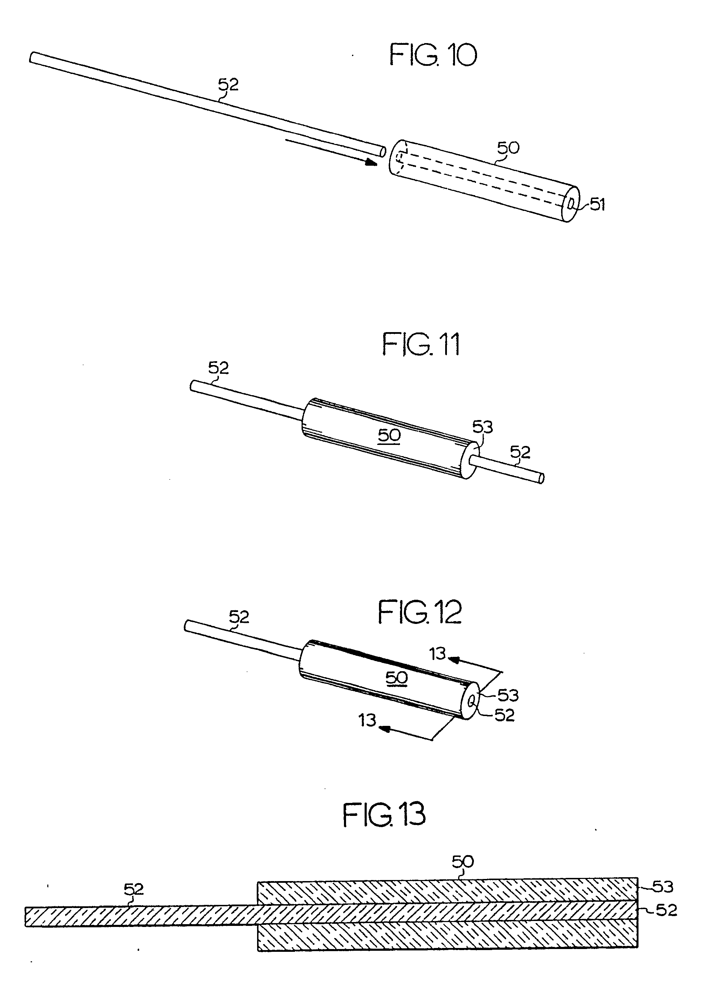

Figure 9 shows a side cutaway view of the second embodiment. Note that the floor of the channel of frame 43 gently rises in the middle portion. The effect of this and dimples such as 47 and 48 allow the rods to be lower at the ends of the channel than at the middle, leaving space for entry of optical fibres 28 and 29. This space allows the elimination of the lid recesses contained in the earlier embodiment.

In use, the second embodiment is placed between resilient tubular members 22 and 23 within tubular housing 25 which is covered by the crimping sleeve 31, and crimped exactly as shown for the first embodiment. As only the frame and lid are changed in the second embodiment, those further elements need not be repetitiously described. In either embodiment the crimping sleeve may be secured by other means, including application of an epoxy or other adhesive.

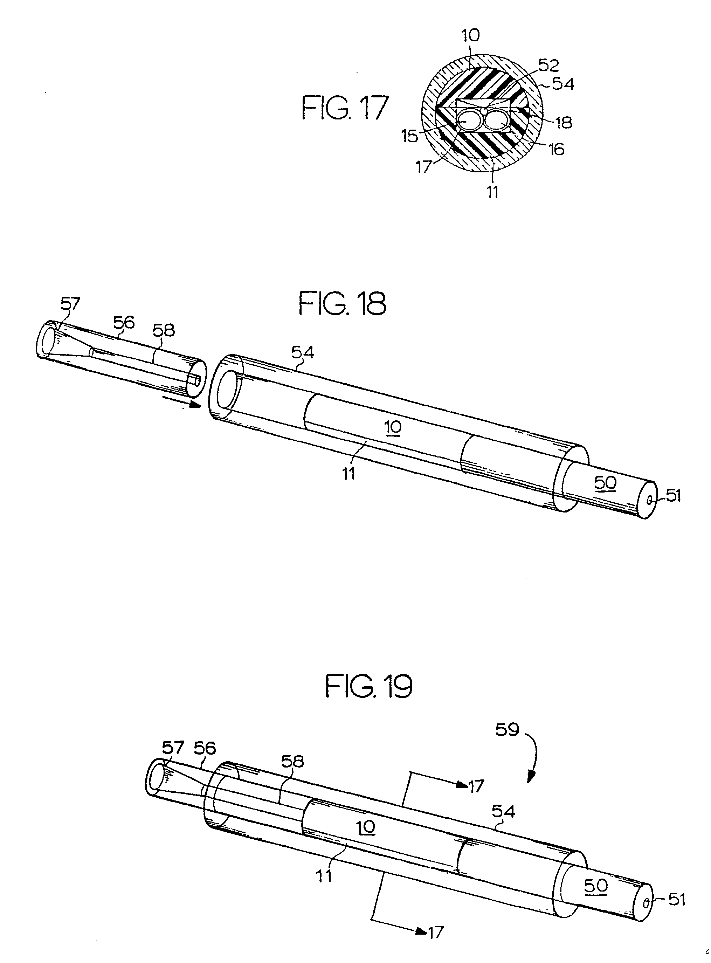

A splicing assembly 59 for optical fibres is shown in Figure 19, it is composed of four basic elements:

(1) an outer tube 54;

(2) a ferrule 50 and optical fibre 52 combination;

(3 an alignment device (see elements 10, 11, 15 and 16) as previously described above (see, for example, Figures 1, part of Figure 2, Figures 7, 8 or 9; and

(4) a second tube 56.

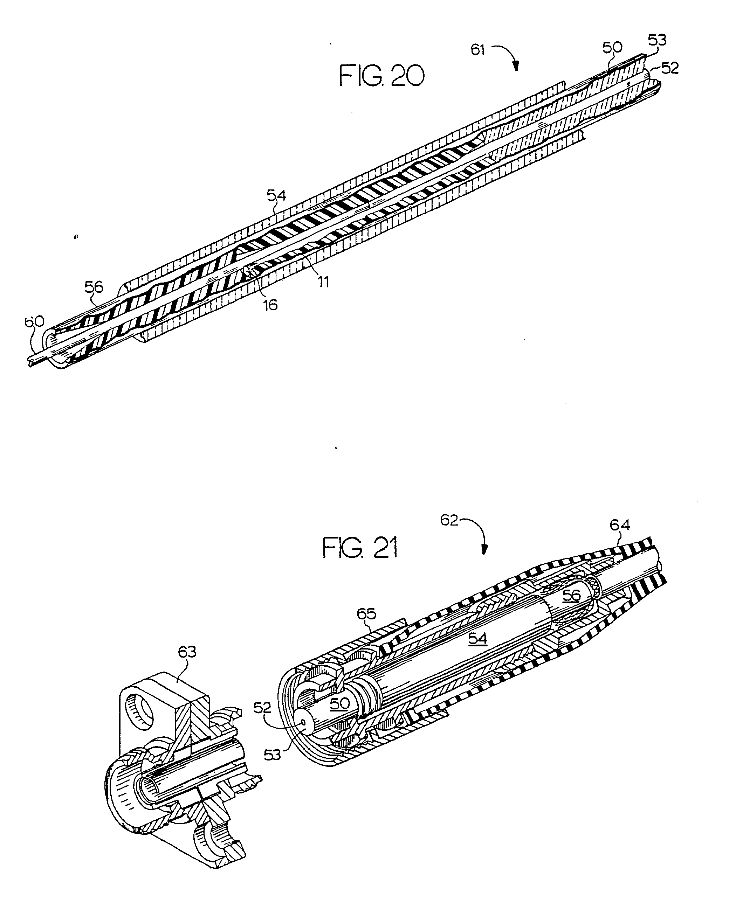

The combination of elements shown in Figure 19 is first assembled at a factory site and then affixed to a housing coupling device 64-65 combination like that shown in Figure 21. The resulting combination 62 is then used in the field in making a job site connection by threading a terminal end portion of an optical fibre 60 into second tube 56 and pushing it into the groove created by rods 15 and 16 until it abuts against the free terminal end of optical fibre 52, at which time it is fixed in place by means of an adhesive, such as U-V curable epoxy or a crimping device.

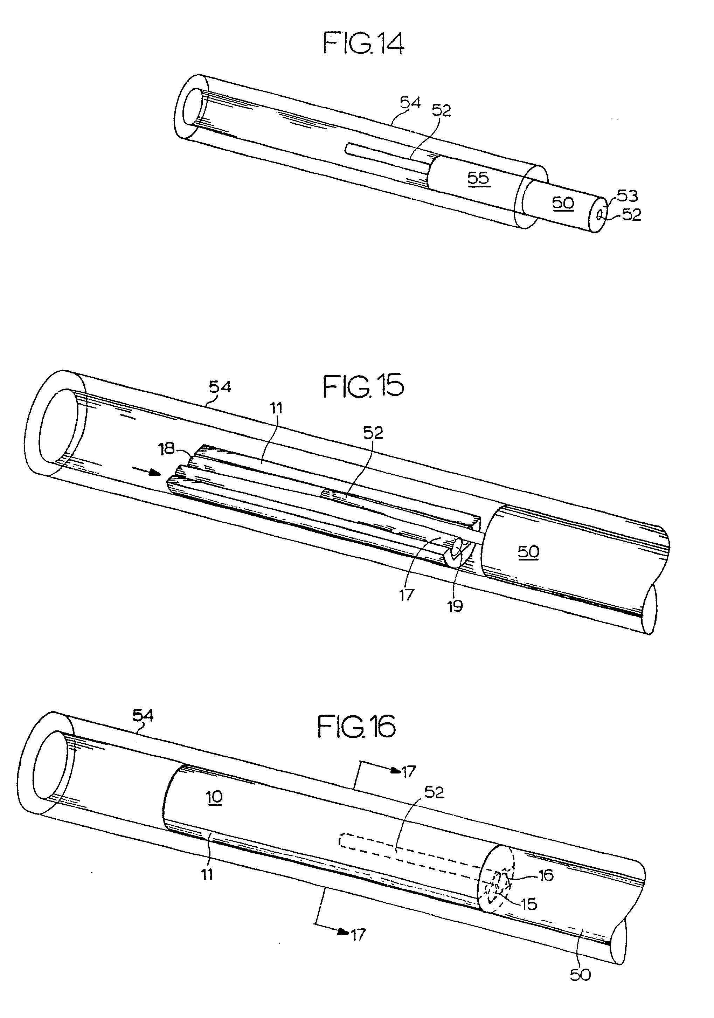

The procedure used to assemble 59 is as follows. Referring now to Figure 10, ferrule 50, made of either glass, plastic, metal or ceramic, is threaded over optical fibre 52. Ferrule 50 has a channel 51 through it into which optical fibre 52 is threaded as shown in Figure 11. Optical fibre 52 is then affixed to ferrule 50 by some well known adhesives such as U-V cured epoxy. Thereafter that portion of optical fibre 52 extending to the right of free edge 53 of ferrule 50 is ground off to create a polished terminal free edge 53 as shown in Figure 12. A terminal portion of optical fibre 52 extends to the left as shown in this figure and in Figure 13. The combination shown in Figures 12 and 13 is then inserted inside of tube 54 as shown in Figure 14. Ferrule 50 and optical fibre 52 is then affixed to tube 54 at a location somewhere near 55 by a suitable adhesive such as U-V curable epoxy. Subsequently, channel 11, along with rods 15 and 16 coated with plastic 17 and 18 is disposed inside of tube 54 and the groove formed between rods 15 and 16 is partially occupied by fibre 52 (see Figure 15, for example). Either embodiment shown in Figures 1 or 7 could be used for frame 11, plus the rods and lids associated therewith. Subsequently, lid 10 is inserted into tube 54 covering the rods 15 and 16, as well as optical fibre 52 (see Figure 16). A cross section of the assembly along line 17-17 has the appearance as that shown in Figure 17.

The next step in assembly is the insertion of second tube 56 into first tube 54. It will be noted that second tube 56 has channel 58 running therethrough and a wide-mouthed entrance 57. Second tube 56 is inserted into first tube 54 to form combination 59. It will be noted that second tube 56 abuts against frame 11 and lid 10 and frame 11 and lid 10 abuts against ferrule 50. Second tube 56 obviously may be affixed to tube 54 by any suitable means such as U-V curable epoxy. Channel 58, which communicates with wide-mouthed entrance 57 of second tube 56, by its very nature has been found to coaxially align with the groove created by rods 15 and 16, more particularly that space occupied by optical fibre 52. Thus, when another optical fibre 60 is inserted into wide mouth 57 and thus through channel 58, it easily finds its way into that groove created by rods 15 and 16 and thus travels along that groove until it abuts against the terminal free edge of optical fibre 52. This is the step that is done in the field and an artisan need only to apply a quick curing epoxy adhesive to wide-mouthed entrance 57 and optical fibre 60 inserted therein in order to affix optical fibre 60 to elements 59 in a permanent fashion. A prior art crimping device may be used instead.

Once element 59 has been completely assembled, a housing-coupling device is affixed to it in a manner well known in the art. Such a housing-coupling device is shown as element 64 and 65 in Figure 21 and the combination of element 59 and housing-coupling device 64-65 creates one portion of a rematable connector. Element 62 may be mated as many times as desirable with a receiving device 63. Element 63 is well known in the prior art and the two elements, 62 and 63, are known in the prior art as an ST type connector. Element 64 of element 62 is a "boot" that circumferentially surrounds a portion of element 59 and is removably attachable to element 65 in a manner well known in the art. A field artisan to make a splice need only to thread boot 64 onto an optical fibre (usually a tight buffered optical fibre) with the tight buffered optical fibre stripped so that a terminal portion of the bare fibre 60 is exposed, insert bare fibre 60 into element 56 and into the alignment device until its terminal free edge abuts against optical fibre 52, at which time the wide mouth portion of second tube 56 receives an epoxy adhesive to affix in place optical fibre 60 to second tube 56. A suitable crimping device may be used instead. Thereafter, boot 64 is then affixed to element 65 and the rematable splice 62 is ready to be removably engaged with receiving device 63.

## Claims

1. An alignment device for splicing optical fibers comprising a frame (11) having a lengthwise channel (19) therein that opens to opposite ends of the frame, two rigid rods (15,16) which lie beside one another in the channel, delimiting a groove therebetween into which two optical fiber terminal end portions (28,29 or 52,60) may be aligned and abutted, and a lid (10) covering the rigid rods characterised in that the rigid rods (15,16) have a resilient lengthwise coating (17,18) and the lid (10) is at least partially covered by a resilient coating (12); the coated lid being adapted to be in lengthwise contact with the optical fiber terminal end portions (28,29 or 52,60) and/or the two rigid coated rods when the lid is closed.

2. An alignment device as claimed in claim 1 and further characterised in that the rod coating is between 0.0015 inch (0.038 mm) and 0.004 inch (0.102 mm) thickness and the lid coating is between 0.0015 inch (0.038 mm) and 0.010 inch (0.254 mm).

3. An alignment device as claimed in claim 2 and further characterised in that the coatings (17,18,12) for the rods (15,16) and the lid (10) all have a thickness of 0.002 inch (0.051 mm) ± 0.0002 inch (0.0051 mm).

4. An alignment device as claimed in any of claims 1 to 3 and further characterised in that the lid (10) has a recess (13 or 14) in the end thereof that is adjacent the groove delimited by the coated rods (15,16), to facilitate entry of an optical fiber into the groove.

5. An alignment device as claimed in any of claims 1 to 4 and further characterised in that the coated portion (12) of the lid (10) is flat.

6. An alignment device as claimed in any of claims 1 to 4 and further characterised in that the coated portion (12) of the lid (10) is curved.

7. An alignment device as claimed in any of claims 1 to 6 and further characterised in that the channel (19) is rectangular in shape.

8. An alignment device as claimed in any of claims 1 to 7 and further characterised in that the coated rods (15,16) are glass rods.

9. An alignment device as claimed in claim 8 and further characterised in that the glass rods (15,16) are optical fibers.

10. An alignment device as claimed in any of claims 1 to 9 and further characterised in that the coated rods (15,16) are in contact with each other.

11. A splice for optical fibers characterised in that it comprises an alignment device as claimed in any of claims 1 to 10 in combination with means (22,23,25 or 54,55,56) to compress the lid (10) closed into a mating relationship with the frame (11) and thereby center the optical fibers.

12. A splice as claimed in claim 10 and further characterised in that the compressing means comprise a housing (25 or 54), longer than the frame (11) and lid (10), placed around the frame and lid with the end portion of the housing extending beyond the frame and lid; and tubular members (22,23 or 50,56) nested within the housing on either end of the frame and lid.

13. A splice as claimed in claim 12 and further characterised in that the tubular members (22,23 or 50,56) are resilient and the housing end portions have longitudinal slots (26,27).

14. A splice as claimed in claim 11 or claim 12 and further characterised in that a malleable crimping sleeve (31) is disposed about the housing (25).

15. A splice as claimed in claim 14 and further characterisd in that the crimping sleeve (31) is crimped over the end portions of the housing (25).

16. An optical fiber splice characterised in that it comprises a splice as claimed in any of claims 11 to 15 and two fiber terminal end portions (28,29) disposed, in endwise abutting relationship with one another, in the groove delimited by the two coated rods (15,16).

17. A splicing assembly for optical fibers comprising:-
a first tube(54);
a ferrule (50) and optical fiber (52), the optical fiber having a first portion and a second portion, the optical fiber first portion being disposed inside of and affixed to the ferrule and the optical fiber second portion lying outside of the ferrule and inside the first tube with a portion (55) of the ferrule disposed inside of and affixed to the first tube; and,

an alignment device (10,11,15,16) as claimed in any of claims 1 to 10 and a second tube (56) both disposed in the first tube.

18. A splicing assembly as claimed in claim 17 and further characterised in that a part of the second tube (56) is affixed to the first tube (54).

19. A splicing assembly as claimed in claims 17 or 18 and further characterised in that a housing coupling device (65) is affixed to the ferrule (50), the coupling device being adapted to be removably coupled to a receiving device (63).

20. A splicing assembly as claimed in any of claims 18 or 19 and further characterised in that the terminal end portion of another optical fiber (60) is disposed within the second tube (60) and the alignment device (10,11,15,16).

21. A splicing assembly as claimed in claim 20 and further characterised in that the terminal end portion of the other optical fiber (60) occupies a part of the groove between the coated rods (15,16) and abuts the terminal end portion of the optical fiber (52).

**Revendications**

1. Dispositif d'alignement pour raccorder des fibres optiques, comprenant un cadre (11) dans laquelle se trouve une gorge longitudinale (19) qui s'ouvre sur les extrémités opposées du cadre, deux tiges rigides (15,16) disposées côte à côte dans la gorge et délimitant entre elles une rainure dans laquelle les portions terminales de deux fibres optiques (28,29 ou 52,60) peuvent être alignées et amenées en butée l'une sur l'autre, et un couvercle (10) recouvrant les tiges rigides, caractérisé en ce que les tiges rigides (15,16) ont un revêtement longitudinal élastique (17,18) et en ce que le couvercle (10) est au moins partiellement recouvert par un revêtement élastique (12), le couvercle revêtu étant adapté pour être en contact longitudinal avec les portions terminales des fibres optiques (28,29 ou 52,60) et/ou les deux tiges rigides revêtues lorsque le couvercle est fermé.

2. Dispositif d'alignement selon la revendication 1, caractérisé en outre en ce que le revêtement de la tige a une épaisseur comprise entre 0,038 mm (0,0015 pouce) et 0,102 mm (0,004 pouce) et que le revêtement du couvercle a une épaisseur comprise entre 0,038 mm (0,0015 pouce) et 0,254 mm (0,010 pouce).

3. Dispositif d'alignement selon la revendication 2, caractérisé en outre en ce que les revêtements (17,18,12) des tiges (15,16) et du couvercle (10) ont tous une épaisseur de 0,051 mm (0,002 pouce) ± 0,0051 mm (0,0002 pouce).

4. Dispositif d'alignement selon l'une des revendications 1 à 3, caractérisé en ce qu'un évidement (13 ou 14) est ménagé dans l'extrémité du couvercle (10) qui est adjacente à la rainure délimitée par les tiges revêtues (15,16) pour faciliter l'introduction d'une fibre optique dans la rainure.

5. Dispositif d'alignement selon l'une des revendications 1 à 4, caractérisé en ce que la portion revêtue (12) du couvercle (10) est plane.

6. Dispositif d'alignement selon l'une des revendications 1 à 4, caractérisé en ce que la portion revêtue (12) du couvercle (10) est incurvée.

7. Dispositif d'alignement selon l'une des revendications 1 à 6, caractérisé en ce que la gorge (19) a une section transversale rectangulaire.

8. Dispositif d'alignement selon l'une des revendications 1 à 7, caractérisé en ce que les tiges revêtues (15,16) sont des tiges de verre.

9. Dispositif d'alignement selon la revendication 8, caractérisé en ce que les tiges de verre (15,16) sont des fibres optiques.

**10.** Dispositif d'alignement selon l'une des revendications 1 à 9, caractérisé en ce que les tiges revêtues (15,16) sont en contact l'une avec l'autre.

**11.** Jonction pour des fibres optiques, caractérisée en ce qu'elle comporte un dispositif d'alignement selon l'une des revendications 1 à 10, en combinaison avec des moyens (22,23,25 ou 54,55,56) pour comprimer le couvercle (10) fermé en prise avec le cadre (11) pour centrer ainsi les fibres optiques.

**12.** Jonction selon la revendication 10, caractérisée en ce que les moyens de compression comportent une gaine (25 ou 54), plus longue que le cadre (11) et que le couvercle (10), disposée autour du cadre et du couvercle avec la portion terminale de la gaine s'étendant au-delà du cadre et du couvercle, et des éléments tubulaires (22,23 ou 50,56) logés à l'intérieur de la gaine à l'une et l'autre des extrémités du cadre et du couvercle.

**13.** Jonction selon la revendication 12, caractérisée en ce que les éléments tubulaires (22,23 ou 50,56) sont élastiques et que les portions terminales de la gaine comportent des fentes longitudinales (26,27).

**14.** Jonction selon la revendication 11 ou la revendication 12, caractérisée en ce qu'un manchon de sertissage malléable (31) est disposé autour de la gaine (25).

**15.** Jonction selon la revendication 14, caractérisée en ce que le manchon de sertissage (31) est serti sur les portions terminales de la gaine (25).

**16.** Jonction de fibres optiques, caractérisée en ce qu'elle comporte une jonction selon l'une des revendications 11 à 15 et deux portions terminales de fibres (28,29) disposées en butée bout à bout l'une avec l'autre, dans la rainure délimitée par les deux tiges revêtues (15,16).

**17.** Ensemble de raccordement pour les fibres optiques, comprenant :
- un premier tube (54) ;
- une virole (50) et une fibre optique (52), la fibre optique ayant une première portion et une deuxième portion, la première portion de la fibre optique étant disposée à l'intérieur de la virole et étant fixée sur elle et la deuxième portion de la fibre optique étant située à l'extérieur de la virole et à l'intérieur du premier tube avec une portion (55) de la virole disposée à l'intérieur du premier tube et fixée sur lui ; et
- un dispositif d'alignement (10,11,15,16) selon l'une des revendications 1 à 10, et un deuxième tube (56) tous deux disposés dans le premier tube.

**18.** Ensemble de raccordement selon la revendication 17, caractérisé en ce qu'une partie du deuxième tube (56) est fixée sur le premier tube (54).

**19.** Ensemble de raccordement selon l'une des revendications 17 ou 18, caractérisé en ce qu'un dispositif de couplage de la gaine (65) est fixé sur la virole (50), le dispositif de couplage étant adapté pour être couplé de façon amovible à un dispositif récepteur (63).

**20.** Ensemble de raccordement selon l'une des revendications 18 ou 19, caractérisé en ce que la portion terminale d'une autre fibre optique (60) est disposée à l'intérieur du deuxième tube (56) et du dispositif d'alignement (10,11,15,16).

**21.** Ensemble de raccordement selon la revendication 20, caractérisé en ce que la portion terminale de l'autre fibre optique (60) occupe une partie de la rainure entre les tiges revêtues (15,16) et vient en butée avec la portion terminale de la fibre optique (52).

**Patentansprüche**

**1.** Ausrichtungsvorrichtung zum Spleißen optischer Fasern mit einem Rahmen (11), der einen Längskanal (19) darin aufweist, der sich zu entgegengesetzten Enden des Rahmens öffnet, zwei starren Stäben (15, 16), die nebeneinander in dem Kanal liegen und eine Vertiefung zwischen sich eingrenzen, in die zwei Abschluß-Endstücke (28, 29 oder 52, 60) einer optischen Faser ausgerichtet und aneinandergrenzend sein können, und einer Abdeckung (10), die die starren Stäbe bedeckt,

**dadurch gekennzeichnet,**

daß die starren Stäbe (15, 16) eine federnde Längsummantelung (17, 18) aufweisen und die Abdeckung (10) zumindest teilweise durch eine federnde Ummantelung (12) bedeckt ist; wobei die ummantelte Abdeckung geeignet ist, mit den Abschluß-Endstücken (28, 29 oder 52, 60) und/oder den zwei starren ummantelten Stäben in einem Längskontakt zu sein, wenn die Abdeckung geschlossen ist.

2. Ausrichtungsvorichtung nach Anspruch 1, dadurch gekennzeichnet, daß die Stabummantelung zwischen 0,0015 Inch (0,038 mm) und 0,004 Inch (0,102 mm) und die Abdeckungsummantelung zwischen 0,0015 Inch (0,038 mm) und 0,010 Inch (0,254 mm) dick ist.

3. Ausrichtungsvorichtung nach Anspruch 2, dadurch gekennzeichnet, daß die Ummantelungen (17, 18, 12) für die Stäbe (15, 16) und die Abdeckung (10) alle eine Dicke von 0,002 Inch (0,051 mm) ± 0,0002 Inch (0,0051 mm) aufweisen.

4. Ausrichtungsvorichtung nach einem der Ansprüche 1 bis 3, dadurch gekennzeichnet, daß die Abdeckung (10) eine Aussparung (13 oder 14) an ihrem Ende aufweist, die benachbart zu der Vertiefung ist, die durch die ummantelten Stäbe (15, 16) begrenzt ist, um ein Eingeben einer optischen Faser in die Vertiefung zu ermöglichen.

5. Ausrichtungsvorichtung nach einem der Ansprüche 1 bis 4, dadurch gekennzeichnet, daß der ummantelte Abschnitt (12) der Abdeckung (10) flach ist.

6. Ausrichtungsvorichtung nach einem der Ansprüche 1 bis 4, dadurch gekennzeichnet, daß der ummantelte Abschnitt (12) der Abdeckung (10) gekrümmt ist.

7. Ausrichtungsvorichtung nach einem der Ansprüche 1 bis 6, dadurch gekennzeichnet, daß der Kanal (19) eine rechteckige Form aufweist.

8. Ausrichtungsvorichtung nach einem der Ansprüche 1 bis 7, dadurch gekennzeichnet, daß die ummantelten Stäbe (15, 16) Glasstäbe sind.

9. Ausrichtungsvorichtung nach Anspruch 8, dadurch gekennzeichnet, daß die Glasstäbe (15, 16) optische Fasern sind.

10. Ausrichtungsvorichtung nach einem der Ansprüche 1 bis 9, dadurch gekennzeichnet, daß die ummantelten Stäbe (15, 16) in Kontakt miteinander sind.

11. Spleißvorrichtung für optische Fasern, dadurch gekennzeichnet, daß sie eine Ausrichtungsvorrichtung nach einem der Ansprüche 1 bis 10 aufweist in Kombination mit einer Einrichtung (22, 23, 25 oder 54, 55, 56), um die Abdeckung (10) zu komprimieren, die in einer abgestimmten Beziehung mit dem Rahmen (11) geschlossen ist, und um dadurch die optischen Fasern zu zentrieren.

12. Spleißvorrichtung nach Anspruch 10, dadurch gekennzeichnet, daß die Komprimierungseinrichtung ein Gehäuse (25 oder 54) aufweist, das länger als der Rahmen (11) und die Abdeckung (10) ist und das um den Rahmen und die Abdeckung angeordnet ist, wobei der Endabschnitt des Gehäuses sich über den Rahmen und die Abdeckung erstreckt; und röhrenförmige Elemente (22, 23 oder 50, 56) aufweist, die in dem Gehäuse an jedem Ende des Rahmens und der Abdeckung eingesetzt sind.

13. Spleißvorrichtung nach Anspruch 12, dadurch gekennzeichnet, daß die röhrenförmigen Elemente (22, 23 ode 50, 56) federnd sind und die Gehäuseendabschnitte längliche Schlitze (26, 27) aufweisen.

14. Spleißvorrichtung nach Anspruch 11 oder 12, dadurch gekennzeichnet, daß ein verformbares Umhüllungsrohr (31) um das Gehäuse (25) herum angeordnet ist.

15. Spleißvorrichtung nach Anspruch 14, dadurch gekennzeichnet, daß das Umhüllungsrohr (31) über die Endabschnitte des Gehäuses (25) gebördelt ist.

**16.** Optische Faserspleißvorrichtung, dadurch gekennzeichnet, daß sie eine Spleißvorrichtung nach einem der Ansprüche 11 bis 15 aufweist und zwei Faserabschlußendabschnitte (28, 29), die in einer mit den Enden aneinander stoßenden Beziehung in der Vertiefung eingegrenzt sind, die durch die zwei ummantelten Stäbe (15, 16) eingegrenzt sind.

**17.** Spleißanordnung für optische Fasern, die aufweist:

ein erstes Rohr (54);

einen Ringbeschlag (50) und eine optische Faser (52), wobei die optische Faser einen ersten Abschnitt und einen zweiten Abschnitt aufweist, wobei der erste Abschnitt der optischen Faser in und befestigt an dem Ringbeschlag angeordnet ist, und wobei der zweite Abschnitt der optischen Faser außerhalb des Ringbeschlags und in dem ersten Rohr liegt, wobei ein Abschnitt (55) des Ringbeschlags in und befestigt an dem ersten Rohr angeordnet ist; und

eine Ausrichtungsvorrichtung (10, 11, 15, 16) nach einem der Ansprüche 1 bis 10 und ein zweites Rohr (56), die beide in dem ersten Rohr angeordnet sind.

**18.** Spleißanordnung nach Anspruch 17, dadurch gekennzeichnet, daß ein Teil des zweiten Rohrs (56) an dem ersten Rohr (54) befestigt ist.

**19.** Spleißanordnung nach Anspruch 17 oder 18, dadurch gekennzeichnet, daß eine Gehäusekopplungsvorrichtung (65) an dem Ringbeschlag (50) angebracht ist, wobei die Kopplungsvorrichtung geeignet ist, entfernbar an einer Aufnahmevorrichtung (63) gekoppelt zu sein.

**20.** Spleißanordnung nach einem der Ansprüche 18 oder 19, dadurch gekennzeichnet, daß der Abschluß-Endabschnitt einer weiteren optischen Faser (60) in dem zweiten Rohr (60) und der Ausrichtungsvorrichtung (10, 11, 15, 16) angeordnet ist.

**21.** Spleißanordnung nach Anspruch 20, dadurch gekennzeichnet, daß der Abschluß-Endabschnitt der weiteren optischen Faser (60) einen Teil der Vertiefung zwischen den ummantelten Stäben (15, 16) besetzt und an den Abschluß-Endabschnitt der optischen Faser (52) stößt.

# FIG.1

# FIG. 2

# FIG. 3

# FIG. 4

## FIG. 5a

## FIG. 5b

## FIG. 6

FIG. 7

FIG. 8

FIG. 9

FIG. 10

52

50

51

FIG. 11

52

50

53

52

FIG. 12

52

50

13

53

52

13

FIG. 13

52

50

53

52

FIG.14

FIG.15

FIG.16

FIG. 17

FIG. 18

FIG. 19

FIG. 20

FIG. 21